# EUROPEAN PATENT SPECIFICATION

(11) **EP 2 755 211 B1**
(45) Date of publication and mention of the grant of the patent: **06.03.2019**
(21) Application number: 14150439.9
(22) Date of filing: 08.01.2014
(51) Int. Cl.: H01B 13/14, B29C 35/10, B29C 47/88

(54) **Method and arrangement of crosslinking or vulcanizing an elongate element**
Verfahren und Anordnung zur Verbindung oder Vulkanisierung eines länglichen Elementes
Procédé et agencement pour réticuler ou vulcaniser un élément allongé

(30) Priority: 09.01.2013 FI 20135028
(43) Date of publication of application: 16.07.2014
(73) Proprietor: Maillefer S.A., 1024 Ecublens (CH)
(72) Inventor: Huotari, Pekka, 79140 Kotalahti (FI); Leppänen, Jorma, 1024 Ecublens (CH)
(74) Representative: Kolster Oy Ab

(56) References cited:
- US-A- 3 645 656
- US-A1- 2004 234 640
- US-A1- 2006 182 880

## Description

The invention relates to a method of crosslinking or vulcanizing an elongate element the method comprising the following steps:
an extrusion step in which a conductor element is coated by a layer of crosslinkable material,
a step in which a crosslinking reaction is carried out by processing the coated conductor element in a vulcanization tube after the extrusion step, and
a cooling step in which the coated conductor element is cooled.

The invention relates also to an arrangement for crosslinking or vulcanizing an elongate element.

As described above the present invention deals with a method and arrangement for processing an elongate element. The elongate elements are in practice electrical cables, i.e. the present invention relates to manufacturing electrical wires and cables, more specifically cables for High Voltage (HV) and Extremely High Voltage (EHV).

One widely used and well known construction of energy transmission cables for Medium and High Voltage consist of an electrical conductor (Cu or Al), insulated with one or several layers of plastic material, in general polyethylene. This insulation is applied onto the conductor in a per se known extrusion process.

To provide sufficient mechanical and electrical strength, the extruded thermoplastic polymer material is crosslinked. One method known in the art used for that purpose is the known peroxide crosslinking process. In this process, a catalyst (peroxide) is added to the thermoplastic material, which, under the effect of temperature, will eventually trigger the chemical reaction leading to the crosslinking of the polymer.

A well-known method to improve the heating/crosslinking process described above is to heat the conductor internally, such that heat diffuses into the insulation also from the inside, and therefore accelerates the crosslinking reaction. This internal heating of the conductor is obtained by means of inductively generating eddy currents inside the conductor. Such inductive heating elements have been known and used for a long time. Said inductive heating elements have been used as preheaters upstream of the extrusion head, i.e. before the extrusion head when seen in the direction of the process and as post-heaters downstream of the extrusion head before the vulcanization tube, i.e. after the extrusion head of the extrusion head and before the vulcanization tube, and also along the vulcanization tube.

As examples of the known prior art CH Patent 644 548, EP Patent 1 839 319 B1 and EP Patent Application 12185803.9 can be mentioned.

CH Patent 644 548 shows a vulcanization tube setup where the cable is heated from the outside by a pressurized gas, and where the core is heated up by inductive heating elements placed along the vulcanization tube.

EP Patent 1 839 319 B1 describes an inductive heater arrangement placed downstream of the extrusion head, at the beginning of the vulcanization tube.

EP Patent Application 12185803.9 discloses a setup for inductively heating the cable core prior to the extrusion step, with heaters placed upstream of the extrusion head.

As a further example of the prior art US 2006/182880 A1 can be mentioned. US 2006/182880 A1 discloses a method of crosslinking an elongate element according to the preamble of claim 1 and an arrangement of crosslinking an elongate element according to the preamble of claim 3.

The setups described in the documents discussed above are commonly used in the manufacturing of low and medium voltage cables. For such cables, the insulation thickness relative to the conductor size is relatively small, and the insulation material will not have a significant tendency to flow around the core under the effect of gravity, even when heated up.

The situation is however completely different for the production of high and extremely high voltage cables.

The line speed for HV and EHV cores is very slow (in the range 0.2 to 5 m/min) leading to significant residence time in the heating section. To maintain the quality of outer semiconductive and insulation layers, relatively low heating profile has to be used which means in practice lower line speed.

As these types of cables have high insulation thicknesses, there is considerable weight of insulation supported by a small conductor. It is important here to realize that if the melt strength of the insulation material close to the conductor decreases during the manufacturing process of HV and EHV cables, as is in the case when the temperature increases rapidly, significant drooping occurs and the insulation will be off-centered which cannot be approved.

Owing to said facts the known setups discussed above cannot be used to accelerate the crosslinking reaction and increase the line speed.

The matters discussed above are problems of the prior art. The object of the invention is to obtain a method and an arrangement by which the problems of the prior art can be solved. This is obtained with the invention. The method of the invention according to claim 1 is characterized in that the method further comprises a step in which after the vulcanization tube the coated conductor element is heated by using inductive heating, and that the step in which the coated conductor element is heated is carried out immediately before the cooling step. The arrangement of the invention according to claim 3 is characterized in that the arrangement further comprises an inductive heating device placed after the vulcanization tube for heating the coated conductor element, and that the inductive heating device is placed immediately before the cooling tube.

An advantage of the invention is in that it solves the problems of the prior art discussed above. In other words the invention offers a method and an arrangement by which it is possible considerably to increase the line speed when compared to the prior art technique.

In the following the invention will be described in greater detail with reference to the embodiments shown in the attached drawing, whereby
Figure 1 shows a principle layout of a known vulcanizing line,
Figure 2 shows a principle layout of a vulcanizing line in which the present invention is used,
Figures 3a and 3b show schematically gravitational loads towards and aside the conductors 20 kV vs. 150 kV,
Figure 4 is a table showing with numbers the situation between the cables shown in Figures 3a and 3b,
Figure 5 shows an example of cable temperatures and cross-linking without the present invention when line speed is 1,27 m/min,
Figure 6 shows the example of Fig. 5 with the present invention when line speed is 1,72 m/min,
Figure 7 shows the example of Fig. 5 without the present invention when line speed is 1,72 m/min,
Figures 8a shows cable temperature and cross-linking without the present invention after vulcanization tube when line speed is 1,72 m/min,
Figure 8b shows the situation 20 m later when compared to Fig. 8a,
Figure 9a shows cable temperature and cross-linking with the present invention just after the inductive heating device, and
Figure 9b shows the situation 20 m later when compared to Fig. 9a.

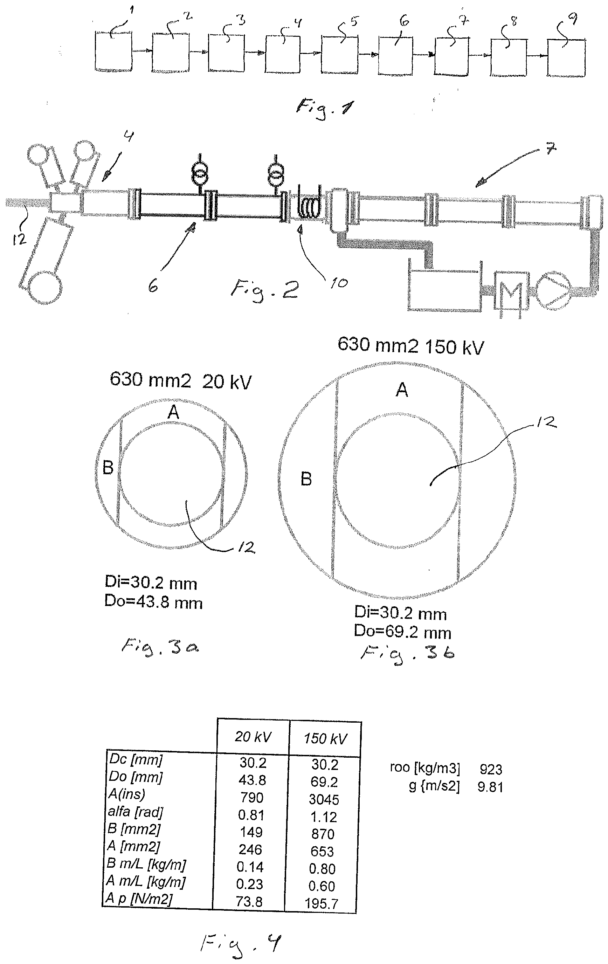

Figure 1 shows a principle layout of a vulcanizing extrusion line. The vulcanizing extrusion line comprises a payoff 1, a metering capstan or metering caterpillar 2, a preheater 3 for a conductor element, an extrusion group with an extruder head 4, a postheater 5, a vulcanization tube 6, a cooling tube 7, a caterpillar or a capstan 8 and a take-up 9.

As discussed earlier operation and construction of the extrusion line described above is well-known to a person skilled in the art, and therefore operation or/and construction of the extrusion line is not described in detail here. Referring to said matter note here that for example preheater 3 can be placed upstream of the metering capstan 2 etc.

In the cable manufacturing process described above, the insulation has to be extruded onto the conductor at a temperature sufficiently low as to avoid premature crosslinking in the extrusion equipment, as this would lead to defects of the insulation.

After the extrusion step, the material has to be heated up at a temperature that is sufficiently high to start and complete the chemical reaction within the shortest possible time.

The crosslinking reaction is carried out in the vulcanization tube, i.e. a tube surrounding the extruded electrical cable located downstream of the extrusion head, inside which the cable is heated up by radiant and/or convective heat transfer.

The heat diffusion in the insulation material is however low, and the polymer layers close to the conductor will take the longest time to increase temperature and undergo the chemical reaction desired.

As discussed above a well-known method to improve the heating/crosslinking process is to heat the conductor internally so that heat diffuses into the insulation material extruded also form inside and therefore accelerates the crosslinking reaction. This internal heating is materialized by using inductive heating procedure.

As discussed earlier further said internal heating operates well in connection with low and medium voltage cables having relatively low insulation thicknesses, but the situation is completely different in connection with High Voltage and Extremely High Voltage cables having high insulation thicknesses. In High Voltage cables or in Extremely High Voltage cables the problems relate to eventual drooping of the insulation material as described earlier.

Figure 2 shows a principle layout of a vulcanizing line in which the present invention is used. In Figure 2 same reference numbers are used to indicate corresponding parts when compared to Figure 1.

Figure 2 shows in fact a part of a vulcanizing extrusion line, i.e. only the parts needed to understand the invention are shown. For example pay-off and take-up is not shown on Figure 2. A person skilled in the art however instantly understands the structure and operation of the line shown in Figure 2 when looking for example Figure 2 together with figure 1.

The embodiment shown in Figure 2 has an extrusion group with extruder head 4 and telescopic tube and, vulcanizing tube 6 and cooling tube 7 which in this embodiment is a device with closed-circuit gas cooling. Conductor element guided to the extruder head 4 is shown with reference number 12.

According to the essential idea of the invention there is also an inductive heating device 10 placed after the vulcanization tube 6 for heating the coated conductor element, i.e. the point in the invention is that the coated conductor element is heated after the vulcanization tube 6 by using inductive heating.

Figure 2 shows clearly that the inductive device 10 has been placed downstream of the vulcanization tube, i.e. after the vulcanization tube 6 and before cooling tube 7.

As described above in the invention, an inductive heating of the conductor is placed downstream of the vulcanization tube 6. At this point of the process, the crosslinking reaction has progressed sufficiently so that the insulation is partially crosslinked close to the conductor and has increased stiffness or viscosity. Therefore it can be heated up from the conductor by means of inductive heating and thus accelerate completion of the crosslinking without drooping effects.

The facts described above permit to increase the line speed compared to the setup without said inductive heating. Said inductive heating, i.e. by using inductive device 10 as a post heater in the way shown in Figure 2 completes the crosslinking process and also eliminates harmful drooping effects described earlier.

Figures 3a, 3b and 4 describe said drooping effect. Figures 3a and 3b show schematically the difference of gravitational load towards and aside of two different conductors, namely 20 kV (Fig 3a) and 150 kV cables (3b) having identical conductor diameters. Figures 3a and 3b show said matters in terms of shear stress in the insulation due to gravitational forces. Conductor element is shown with reference number 12.

The insulation material in areas B and below the conductor element 12, due to its own weight, generates a shear stress in vertical direction along the separation line between areas A and B. The still hot plastic material will therefore have a tendency so sag, with loss of centering and roundness of the insulation. This tendency to sag depends on the level of shear stress on one hand, and on the melt strength on the other hand, which in turn decreases with increasing temperatures.

The matters discussed above and shown in Figures 3a and 3b are shown with numbers in Figure 4. The calculation of Figure 4 as an example compares with numbers the situation of a 20 kV cable to a 150 kV cable of identical conductor element diameter (30,2 mm). It appears that the gravitational load in the 150 kV cable is almost 3 times bigger than in the 20 kV cable. Therefore, if the insulation material close to the conductor element of the 150 kV cable was heated up while still in thermoplastic state, it would sag to an unacceptable extent.

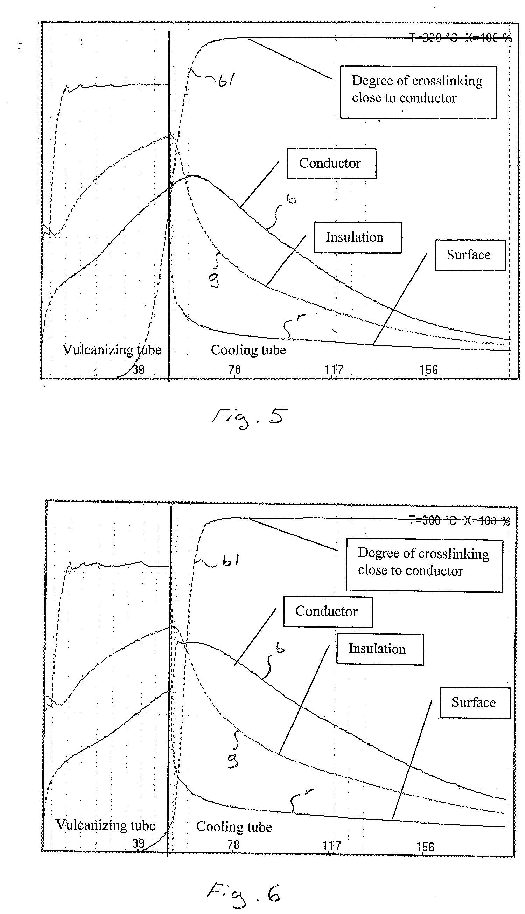

Figures 5 - 9 show an example in which the situation is compared with the same product with and without the present invention.

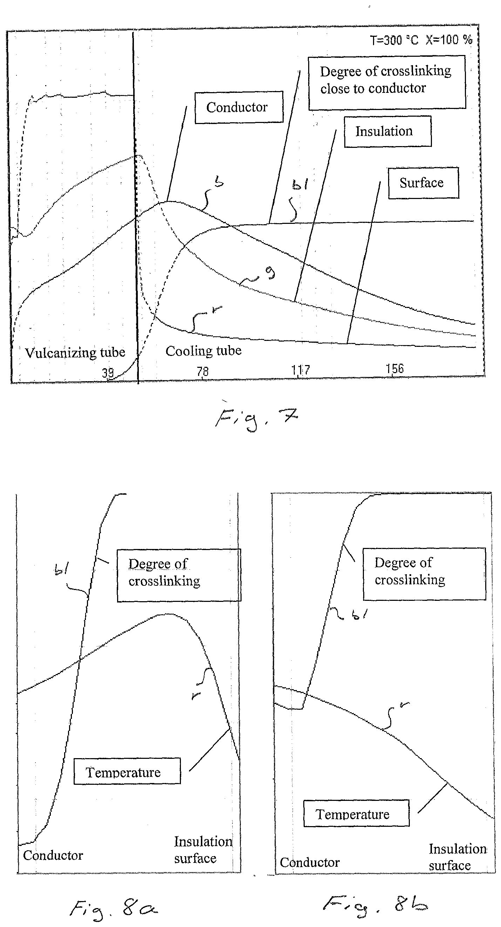

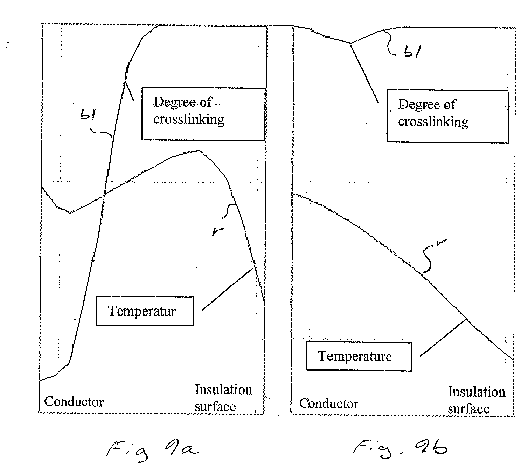

Data of the example:
Copper A_{c} = 630 mm², Uₒ = 150 kV
without inductive heating line speed is 1.27 m/min to reach cross-linking 96% (Fig. 5)
without inductive heating with line speed 1.72 m/min cross-linking is 40% (Fig. 7, Fig 8a and Fig 8b)
with inductive heating line speed is 1.72 m/min to reach cross-linking 96% (Fig. 6, Fig 9a and Fig.9b)

Figures 5, 6 and 7:
Curves: b = conductor temperature, g = insulation temperature, r = surface temperature, bl = cross-linking. The references b, g, r and bl are shown in the Figures 5, 6 and 7.
X-axis from cross-head to end-seal
Y-axis T = 0...300 °C / X = 0...100%

Figures 5 and 6:
Curves: r = temperature, bl = cross-linking. The references r and bl are shown in Figures 5 and 6.
X-axis from conductor surface to cable surface
Y-axis T = 0...300 °C / X = 0...100%

The example shown above proves that by using the invention it is possible to obtain higher line speeds when compared to the technique of the prior art.

The invention has been described above by using the embodiments described in the Figures. The embodiments shown are by no means intended to restrict the invention but the invention may be varied completely freely within the claims. The vulcanizing line used can be formed quite freely, i.e. the placements of various steps can vary and there can be additional steps, too. For example the coated conductor element can be also heated before the cooling step if needed, i.e. it is quite possible to provide the vulcanizing line with a pre-heater before the extrusion step. Said pre-heater can be for example an inductive heating device etc.

## Claims

1. Method of crosslinking or vulcanizing an elongate element the method comprising the following steps:
an extrusion step (4) in which a conductor element (12) is coated by a layer of crosslinkable material,
a step in which a crosslinking reaction is carried out by processing the coated conductor element in a vulcanization tube (6) after the extrusion step, and
a cooling step (7) in which the coated conductor element is cooled,
**characterized in that** the method further comprises a step in which after the vulcanization tube (6) the coated conductor element is heated by using inductive heating (10), and that the step in which the coated conductor element is heated is carried out immediately before the cooling step.

2. Method as claimed in claim 1, **characterized in that** the method further comprises a step in which the conductor element (12) is heated before the extrusion step.

3. Arrangement for crosslinking or vulcanizing an elongate element in which arrangement a conductor element (12) is coated by a layer of crosslinkable material by using an extruder head (4), the crosslinking reaction is carried out after the extruder head in a vulcanization tube (6), and coated conductor element is cooled by using a cooling tube (7), **characterized in that** the arrangement further comprises an inductive heating device (10) placed after the vulcanization tube (6) for heating the coated conductor element, and that the inductive heating device (10) is placed immediately before the cooling tube (7).

4. Arrangement as claimed in claim 3, **characterized in that** the arrangement further comprises a pre-heater for heating the conductor element before the extruder head (4).

## Patentansprüche

1. Verfahren zur Vernetzung oder Vulkanisierung eines länglichen Elements, wobei das Verfahren folgende Schritte umfasst:
einen Extrusionsschritt (4), in dem ein Leiterelement (12) mit einer Schicht aus einem vernetzbaren Material beschichtet wird,
einen Schritt, in dem eine Vernetzungsreaktion durch Bearbeiten des beschichteten Leiterelements in einem Vulkanisierungsrohr (6) nach dem Extrusionsschritt ausgeführt wird, und
einen Abkühlungsschritt (7), in dem das beschichtete Leiterelements abgekühlt wird,
**dadurch gekennzeichnet, dass** das Verfahren des Weiteren einen Schritt umfasst, in welchem nach dem Vulkanisierungsrohr (6) das beschichtete Leiterelement unter Verwendung von induktiver Erwärmung (10) erwärmt wird, und dass der Schritt, in dem das beschichtete Leiterelement erwärmt wird, unmittelbar vor dem Abkühlungsschritt ausgeführt wird.

2. Verfahren nach Anspruch 1, **dadurch gekennzeichnet, dass** das Verfahren des Weiteren einen Schritt umfasst, in dem das Leiterelement (12) vor dem Extrusionsschritt erwärmt wird.

3. Anordnung zur Vernetzung oder Vulkanisierung eines länglichen Elements, wobei in dieser Anordnung ein Leiterelement (12) mit einer Schicht aus einem vernetzbaren Material unter Verwendung eines Extruderkopfes (4) beschichtet wird, die Vernetzungsreaktion nach dem Extruderkopf in einem Vulkanisierungsrohr (6) ausgeführt wird und das beschichtete Leiterelement unter Verwendung eines Abkühlungsrohres (7) abgekühlt wird, **dadurch gekennzeichnet, dass** die Anordnung des Weiteren eine induktive Heizvorrichtung (10) umfasst, die hinter dem Vulkanisierungsrohr (6) platziert ist, um das beschichtete Leiterelement zu erwärmen, und dass die induktive Heizvorrichtung (10) unmittelbar vor dem Abkühlungsrohr (7) platziert ist.

4. Anordnung nach Anspruch 3, **dadurch gekennzeichnet, dass** die Anordnung des Weiteren einen Vorwärmer umfasst, um das Leiterelement vor dem Extruderkopf (4) zu erwärmen.

## Revendications

1. Procédé de réticulation ou de vulcanisation d'un élément allongé, le procédé comprenant les étapes suivantes:
une étape d'extrusion (4) dans laquelle un élément conducteur (12) est revêtu d'une couche de matériau réticulable,
une étape dans laquelle une réaction de réticulation est réalisée en traitant l'élément conducteur revêtu dans un tube de vulcanisation (6) après l'étape d'extrusion, et
une étape de refroidissement (7) dans laquelle l'élément conducteur revêtu est refroidi,
**caractérisé en ce que** le procédé comprend en outre une étape dans laquelle, après le tube de vulcanisation (6), l'élément conducteur revêtu est chauffé en utilisant un chauffage par induction (10), et **en ce que** l'étape de chauffage de l'élément conducteur revêtu est effectuée immédiatement avant l'étape de refroidissement.

2. Procédé selon la revendication 1, **caractérisé en ce que** le procédé comprend en outre une étape dans laquelle l'élément conducteur (12) est chauffé avant l'étape d'extrusion.

3. Agencement de réticulation ou de vulcanisation d'un élément allongé dans lequel un élément conducteur (12) est revêtu d'une couche de matériau réticulable à l'aide d'une tête d'extrusion (4), la réaction de réticulation étant réalisée après la tête d'extrusion dans un tube de vulcanisation (6), et l'élément conducteur revêtu est refroidi à l'aide d'un tube de refroidissement (7), **caractérisé en ce que** l'agencement comprend en outre un dispositif de chauffage à induction (10) placé après le tube de vulcanisation (6) pour chauffer l'élément conducteur revêtu, et que le dispositif de chauffage inductif (10) est placé immédiatement avant le tube de refroidissement (7).

4. Agencement selon la revendication 3, **caractérisé en ce que** l'agencement comprend en outre un préchauffeur pour chauffer l'élément conducteur avant la tête d'extrusion (4).
